# EUROPEAN PATENT APPLICATION

(11) **EP 3 836 488 A1**
(43) Date of publication of application: **16.06.2021**
(21) Application number: 20209458.7
(22) Date of filing: 24.11.2020
(51) Int. Cl.: H04L 12/28, G06Q 20/00, H04L 29/08

(54) **METHOD, SYSTEM, AND DEVICE FOR REMOTELY COMMUNICATING WITH AND CONTROLLING LAUNDRY UNITS**

(30) Priority: 09.12.2019 US 201916707747
(71) Applicant: Alliance Laundry Systems LLC, Ripon, Wisconsin 54971 (US)
(72) Inventor: CHIAVETTA, Scott, Weston, Florida 33327 (US); DILL, Adam, Fond du Lac, Wisconsin 54935 (US); CORDOBA, Mauro, Davie, Florida 33325 (US); DICKSON, Alan, Ripon, Wisconsin 54971 (US)
(74) Representative: HGF

(57) **Abstract**

A system and a method is provided for remotely communicating with one or more cleaning units, each including a control unit for operating the cleaning unit, and a Wi-Fi protocol device coupled to the control unit. A gateway unit nearby each of the cleaning units includes two Wi-Fi protocol devices and a cellular chipset coupled to one of the Wi-Fi protocol devices. An internet connected device is wirelessly coupled to one of the Wi-Fi protocol devices of the gateway device, and the cleaning unit Wi-Fi protocol device is wirelessly coupled to one of the Wi-Fi protocol devices of the gateway device.

## Description

### FIELD OF THE INVENTION

The present invention generally relates to a method, system, device, apparatus, and program for remotely communicating with cleaning units, and more particularly to a method, system, device, apparatus, and program for enabling users to remotely communicate with and control cleaning units to configure the units, to receive reports from the units, and to submit payments to the units.

### BACKGROUND OF THE INVENTION

Conventional systems are limited in their ability to provide vended laundry payments to users. Historically, third party add-on systems have been used to provide such vended laundry payment capability. In conventional systems, reporting and configuration is available directly through a TCP (Transmission Control Protocol) connection from a PC (personal computer) or machines directly connected to the Internet. These methods are lacking in performance and security, and no device ties all functionality together in one device. An improved approach is therefore needed.

### SUMMARY OF THE INVENTION

The foregoing and other problems are overcome by a method for enabling users and/or administrators to remotely communicate with cleaning units to configure the units (e.g., by programming a wash or dry cycle), to receive reports from the units (e.g., reports related to the progress or completion of a wash or dry cycle), and to submit payments to the units for such wash or dry cycles. The present invention also provides a system, device, apparatus, and program that operate in accordance with the method.

In an example aspect, the present invention provides a device that operates as a laundry room "gateway." The gateway comprises a single board computer with two Wi-Fi chipsets and a cellular radio chipset. The gateway wirelessly and directly connects cleaning (e.g., laundry) equipment using the IEEE 802.11 protocol to provide internet-based machine reporting and machine configuration while also enabling users to pay for vended laundry from a mobile device or smartphone. The cellular chipset provides an automatic backup to the upstream internet connection.

By virtue of the features of the present invention, users can obtain reporting from and configure laundry equipment from any internet-connected device, including a mobile device such as a smartphone, iPhone, iPad, Android, Blackberry, Galaxy, tablet, notebook, or others. Users can also pay for vended laundry from such a mobile device. The gateway device of the present invention allows laundry equipment to communicate wirelessly with servers on the internet securely.

The present invention overcomes drawbacks of prior techniques and packages everything into a single board computer. No other current laundry system provides a device which can communicate to laundry equipment over the 802.11 protocol, translate the data, and send the data to the internet to make it available in real-time while also allowing payments and configuration of the equipment without the need of a full personal computer or server computer on site.

In one example aspect of the invention translating the data involves gathering the data into a data stream. The data is then decoded from the machine byte arrays into human readable form and sent to the cloud. This translation is done by a piece of software that recognizes the machine type and size based on the data in the byte array and then pulls the relevant data out of the gathered array. The final form is JavaScript Object Notation (JSON) which is then sent to the cloud. Of course, this example is not meant to be limiting, and various other suitable techniques could be used.

In a first embodiment disclosed herein, a system for remotely communicating with one or more cleaning units comprises one or more cleaning units, each cleaning unit comprising a control unit coupled to the cleaning unit for operating the cleaning unit, and a Wi-Fi device coupled to the control unit, a gateway unit comprising two Wi-Fi protocol devices, and a cellular radio chipset, wherein the gateway unit is nearby each of the cleaning units, and an internet connected device wirelessly coupled to the Wi-Fi protocol device, wherein the cleaning unit Wi-Fi device is wirelessly coupled to the gateway Wi-Fi device, and wherein the gateway unit enables the internet connected device to communicate wirelessly with each of the cleaning units thereby enabling the internet connected device to wirelessly configure or control each of the cleaning units.

In another embodiment disclosed herein, a method for remotely communicating with one or more cleaning units comprises using one or more cleaning units, each cleaning unit comprising a control unit coupled to the cleaning unit for operating the cleaning unit, and a first Wi-Fi device coupled to the control unit, providing a gateway unit comprising a Wi-Fi protocol device, and a second Wi-Fi device coupled to the cleaning unit Wi-Fi protocol device, wherein the gateway unit is nearby each of the cleaning units; using an internet connected device wirelessly coupled to the Wi-Fi protocol device, and using the internet connected device to configure or control a respective one of the cleaning units, wherein the first Wi-Fi device is wirelessly coupled to the second Wi-Fi device.

In another embodiment there is disclosed a system for remotely communicating with one or more cleaning units, the system comprising: one or more cleaning units, each cleaning unit comprising: a control unit coupled to the cleaning unit for operating the cleaning unit; and a control unit communication device coupled to the control unit, wherein the control unit communication device is operable to communicate via a Wi-Fi protocol; a gateway device comprising: a first Wi-Fi protocol device; and a second Wi-Fi protocol device, wherein the second Wi-Fi protocol device is operable to wirelessly couple to the control unit communication device of the cleaning units via the Wi-Fi protocol; wherein the gateway device is nearby each of the cleaning units; and an internet connected device wirelessly coupled to the first Wi-Fi protocol device; and wherein the gateway device enables the internet connected device to communicate wirelessly with each of the cleaning units thereby enabling the internet connected device to wirelessly configure or control each of the cleaning units.

The first Wi-Fi protocol device and the second Wi-Fi protocol device may each comprise an IEEE 802.11 protocol device, and wherein the gateway device may further include a cellular chipset.

The one or more cleaning units may comprise a laundry washer or a laundry dryer.

A distance between the gateway device and each of the cleaning units may be less than or equal to 30 meters.

The control unit communication device, the first Wi-Fi protocol device, and the second Wi-Fi protocol device may each have a data transfer rate of greater than or equal to 1.5 megabits per second (Mbps).

The internet connected device may comprise a personal computer, a laptop, a notebook, a tablet, or a mobile phone.

The gateway device may further comprise: a single board computer comprising: an embedded Multi-Media Controller (eMMC) storage; a central processing unit (CPU) coupled to the eMMC; and a memory coupled to the CPU.

The control unit may comprise: a processor; a memory coupled to the processor; and a non-volatile data storage unit coupled to the memory.

Configuring a cleaning unit of the one or more cleaning units may comprise programming a wash cycle or a dry cycle.

Controlling a cleaning unit may comprise submitting a payment for a respective cleaning unit for a cleaning cycle or wirelessly receiving a report from each cleaning unit.

The system may further comprise a cloud server storing a private key and a certificate, wherein the control unit of at least one cleaning unit of the one or more cleaning units may store a public key, wherein the gateway device may be operable to request a unique certificate from the cloud server, wherein the cloud server may be operable to generate the unique certificate from the private key and the certificate stored thereon and return the unique certificate to the gateway device, wherein the gateway device may be operable to create an unbound wireless connection with the control unit communication device of the at least one cleaning unit, wherein the gateway device may be operable to provision the control unit of the at least one cleaning unit, wherein the gateway device may be operable to request unique information from the control unit of the at least one cleaning unit, wherein the control unit of the at least one cleaning unit may be operable to return the requested unique information, wherein the gateway device may be operable to generate a binding token from the unique information and the unique certificate and send the binding token to the cloud server, wherein the cloud server may be operable to sign the binding token with the private key and return the signed binding token to the gateway device, wherein the gateway device may be operable to send the signed binding token to the control unit, wherein the control unit may be operable to verify the signed binding token, and wherein the gateway device may be operable to create a bound wireless connection with the control unit.

In another embodiment there is disclosed a method for remotely communicating with one or more cleaning units, the method comprising: providing one or more cleaning units, each cleaning unit comprising: a control unit coupled to the cleaning unit for operating the cleaning unit; and a control unit communication device coupled to the control unit, wherein the control unit communication device is operable to communicate via a Wi-Fi protocol; providing a gateway device comprising: a first Wi-Fi protocol device, a second Wi-Fi protocol device, and a cellular radio chipset, wherein the gateway device is nearby each of the cleaning units; wirelessly coupling the second Wi-Fi protocol device to the control unit communication device of the cleaning units via the Wi-Fi protocol; and wirelessly coupling an internet connected device to the first Wi-Fi protocol device thereby enabling the internet connected device to wirelessly configure or control at least one of the cleaning units.

The control unit communication device, the first Wi-Fi protocol device, and the second Wi-Fi protocol device may each comprise an IEEE 802.11 protocol device.

The one or more cleaning units may be a laundry washer or a laundry dryer.

A distance between the gateway device and each of the cleaning units may be less than or equal to 30 meters.

The control unit communication device, the first Wi-Fi protocol device, and the second Wi-Fi protocol device may each have a data transfer rate of greater than or equal to 1.5 megabits per second (Mbps).

The internet connected device may comprise a personal computer, a laptop, a notebook, a tablet, or a mobile phone.

The gateway device may further comprise: a single board computer comprising: an embedded Multi-Media Controller (eMMC) storage; a central processing unit (CPU) coupled to the eMMC; and a memory coupled to the CPU.

The control unit may comprise: a processor; a memory coupled to the processor; and a non-volatile data storage unit coupled to the memory.

Configuring the at least one cleaning unit may comprise programming a wash cycle or a dry cycle.

Controlling the at least one cleaning unit may comprise submitting a payment for a cleaning cycle or wirelessly receiving a report from the at least one cleaning unit.

The method may further comprise: storing, by a cloud server, a private key and a certificate; storing, by the control unit of the at least one cleaning unit, a public key; requesting, by the gateway device, a unique certificate from the cloud server; generating, by the cloud server, the unique certificate from the private key and the certificate stored thereon; returning, by the cloud server, the unique certificate to the gateway device; creating, by the gateway device, an unbound wireless connection with the control unit communication device of the at least one cleaning unit; provisioning, by the gateway device, the control unit of the at least one cleaning unit; requesting, by the gateway device, unique information from the control unit of the at least one cleaning unit; returning, by the control unit, the requested unique information to the gateway device; generating, by the gateway device, a binding token from the unique information and the unique certificate; sending, by the gateway device, the binding token to the cloud server; signing, by the cloud server, the binding token with the private key; returning, by the cloud server, the signed binding token to the gateway device; sending, by the gateway device, the signed binding token to the control unit; verifying, by the control unit, the signed binding token; and creating, by the gateway device, a bound wireless connection with the control unit.

In another embodiment there is disclosed a gateway device for remotely communicating with one or more cleaning units, comprising: two Wi-Fi protocol devices; and a cellular chipset coupled to one of the Wi-Fi protocol devices, wherein the gateway device is nearby each of the cleaning units.

The two Wi-Fi protocol devices may each comprise an IEEE 802.11 protocol device.

A distance between the gateway device and each of the cleaning units may be less than or equal to 30 meters.

The two Wi-Fi protocol devices may have a data transfer rate of greater than or equal to 1.5 megabits per second (Mbps).

The gateway device may further comprise: a single board computer comprising: an embedded Multi-Media Controller (eMMC) storage; a central processing unit (CPU) coupled to the eMMC; and a memory coupled to the CPU.

Further features and advantages of the present invention as well as the structure and operation of various embodiments of the present invention are described in detail below with reference to the accompanying drawings.

### BRIEF DESCRIPTION OF THE DRAWINGS

The features and advantages of the present invention will be more readily understood from a detailed description of the exemplary embodiments taken in conjunction with the following figures:
FIG. 1 is a diagram illustrating a system in accordance with an example aspect of the present invention.
FIG. 2 is a diagram of a single board computer base according to an example aspect of the invention.
FIG. 3 is a schematic diagram of a daughterboard on a single board computer, in accordance with an example aspect of the present invention.
FIG. 4 is a block diagram of a control unit of each cleaning unit according to an example aspect of the invention.
FIG. 5 is a flowchart illustrating a method in accordance with an example aspect of the present invention.
FIGS. 6A-6C illustrate reports in accordance with an example aspect of the present invention.
FIGS. 7A-7E illustrate example screenshots of various configuration options for a store owner available through a cloud portal that uses the system for communication, according to an example aspect of the invention.
FIG. 8 is a diagram illustrating an embodiment of the system of FIG. 1 for provisioning and binding a cleaning unit in accordance with an example aspect of the present invention.
FIG. 9 is a diagram illustrating a provisioning and binding method in accordance with an example aspect of the present invention.
FIG. 10 is a diagram illustrating a real-time update and command method in accordance with an example aspect of the present invention.

The invention will next be described in connection with certain exemplary embodiments; however, it should be clear to those skilled in the art that various modifications, additions, and subtractions can be made without departing from the spirit or scope of the claims.

### DETAILED DESCRIPTION OF THE INVENTION

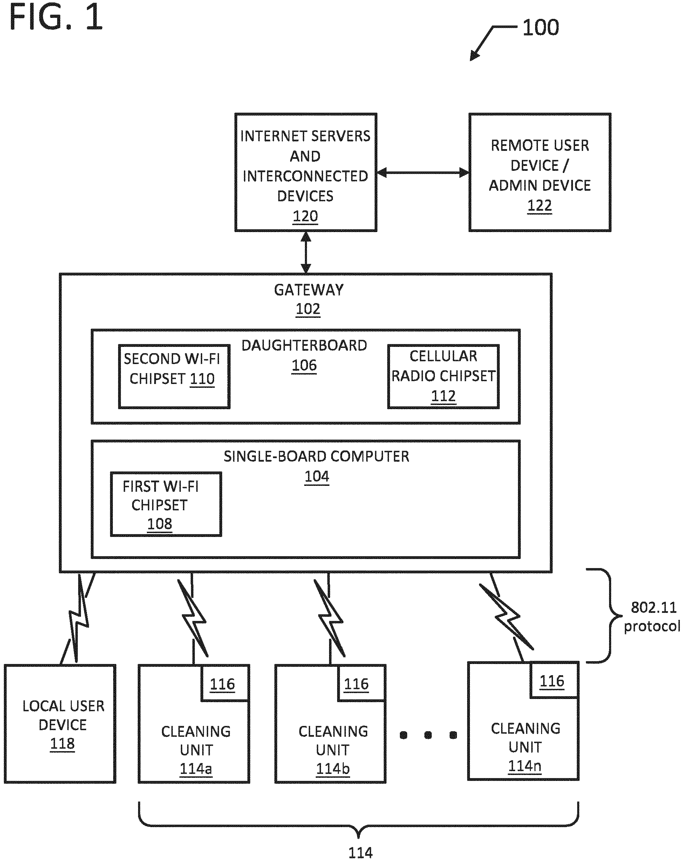

FIG. 1 illustrates a system 100 in accordance with an example aspect of the present invention. System 100 includes a gateway device 102, cleaning units 114, a local user device 118, internet servers and interconnected devices 120, and a remote user device and/or administrator device 122. The gateway device 102 includes a single board computer 104 and a daughterboard 106 (e.g., a Hardware Attached to Top (HAT)). The single board computer 104 includes a first Wi-Fi chipset 108. The daughterboard 106 includes a second Wi-Fi chipset 110 and a cellular radio chipset 112. Each cleaning unit 114 includes a control unit 116.

The control unit 116 of each cleaning unit 114 and the local user device 118 are communicatively coupled to the gateway device 102 via one or more wireless communication channels. In an embodiment, the control unit 116 of each cleaning unit 114 and the local user device 118 are wirelessly communicate with the first Wi-Fi chipset 108 via any of the Institute of Electrical and Electronics Engineers (IEEE) 802.11 protocols for implementing wireless local area network (WLAN) computer communication. As further described herein, the control unit 116 of each cleaning unit 114 wirelessly communicates with the first Wi-Fi chipset 108 via any of the IEEE 802.11 protocols for provisioning and binding the control units 116. The gateway device 102 is communicatively coupled to the remote user device / administrator device 122 via the internet servers and interconnected devices 120. The communicative connection between the gateway device 102 and the internet servers and interconnected devices 120 and remote user device / administrator device 122 can include wired networks, wireless networks, or any combination thereof. For example, the gateway device 102 can wirelessly communicate with the internet servers and interconnected devices 120 via the second Wi-Fi chipset 110 and/or the cellular radio chipset 112.

In an embodiment, the gateway device 102 operates as a laundry room "gateway" that provides a communication link between the control units 116 of the cleaning units 114 and the Internet (e.g., internet servers and interconnected devices 120, the cloud, etc.). Details regarding the gateway device 102 and the components that comprise the gateway device 102 (e.g., the single board computer 104, the daughterboard 106, etc.) are further described herein. The cleaning units 114 are operable to launder clothing and other items. The cleaning units 114 may be located in commercial laundry settings, including but not limited to, laundromats and the like. The local user device 118 is operable by a user to control operation of the cleaning units 114, obtain status information for the cleaning units 114, pay for usage of the cleaning units 114, and the like. Example local user devices 118 include, but are not limited to, smartphones, tablet computing devices, smartwatches, laptop computers, mobile computing devices, and the like. The remote user device / administrator device 122 is operable by a user remotely located from the cleaning units 114 to control operation of the cleaning units 114, obtain status information for the cleaning units 114, pay for usage of the cleaning units 114, and the like. The remote user device / administrator device 122 is operable by an administrator to control operation of the cleaning units 114, configure the cleaning units 114, obtain status information and reports from the cleaning units 114, and the like. Example remote user devices / administrator devices 122 include, but are not limited to, smartphones, tablet computing devices, smartwatches, laptop computers, desktop computers, mobile computing devices, and the like.

The gateway device 102 communicates with the internet services and interconnected devices 120 and a mobile or PC-based local (e.g., Wi-Fi based) user device 118, which can act as a user or administrator device, in order to control or remotely communicate with the cleaning units 114 through the gateway device 102. Accordingly, the gateway device 102 enables cleaning units 114 to communicate wirelessly with servers 120 on the internet, thereby enabling users or administrators (e.g., using remote user device / administrator device 122, etc.) to communicate with and remotely control the cleaning units 114 through the mobile or PC-based local user device 118. The cleaning units 114 may be for example a washer unit and/or a dryer unit, whether these units are standalone or combined. Other appliances are contemplated as well, such as dishwasher units.

"Reporting" includes features such as whether a wash/dry cycle is done or when it will be done; the status of one or more cleaning units 114 (i.e., whether the machine or unit 114 is available or already in use); the types of wash/dry cycles available, etc. "Reporting" may also include, for an administrator, the overall performance of one or more units 114, how many hours of usage the one or more units 114 have, whether the one or more units 114 are in need of repair or an error/service indicator is on; etc.

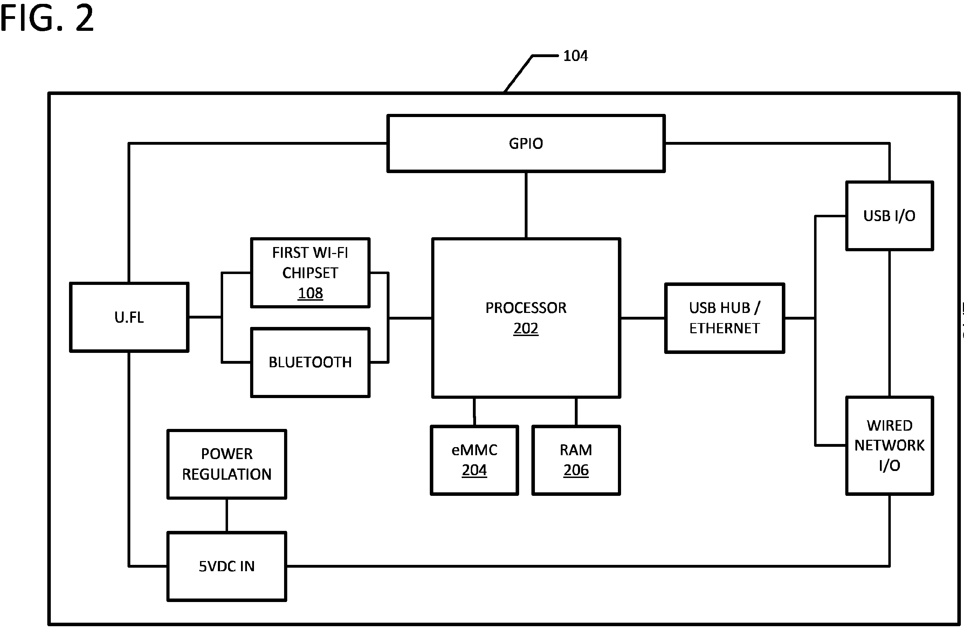

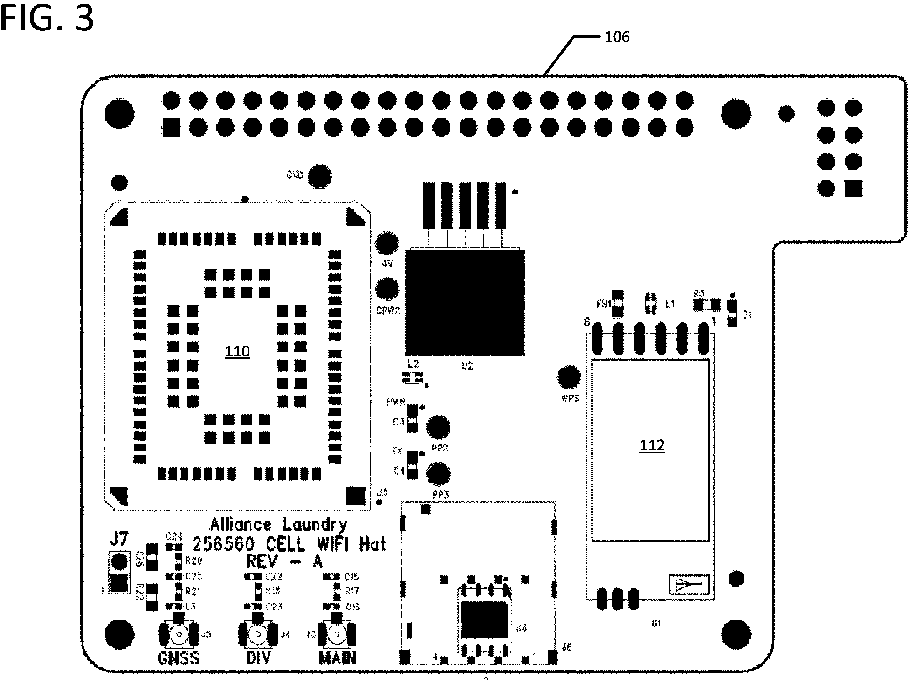

Referring to Figs. 2 and 3, FIG. 2 illustrates a block diagram of the single board computer 104 in accordance with an example aspect of the present invention and FIG. 3 is a schematic diagram of the daughterboard 106 on the single board computer 104, in accordance with an example aspect of the present invention. The single board computer 104 includes the first Wi-Fi chipset 108, a processor 202, an embedded Multi-Media Controller (eMMC) storage 204, and random access memory 206.

The single board computer 104 in one embodiment may include (not shown) an operating system (OS) on local embedded Multi-Media Controller (eMMC) storage, a central processing unit (CPU), a memory/random access memory (RAM), storage, graphics, ports such as Universal Serial Bus (USB) and High Definition Multimedia Interface (HDMI), etc. An example of a suitable single board computer 104 that can be modified in accordance with an example embodiment of the invention is Avid Technologies part number: 90004024 Rev A. The single board computer 104 may use a local Secure Digital (SD) card for storage rather than eMMC storage. The single board computer 104 includes wired input/output and network interfaces (e.g., Ethernet, HDMI, etc.).

The first Wi-Fi chipset 108 and the second Wi-Fi chipset 110 may use any of the IEEE 802.11 protocols for implementing wireless local area network (WLAN) computer communication. The IEEE 802.11 protocols are created and maintained by the Institute of Electrical and Electronics Engineers (IEEE) LAN/MAN Standards Committee (IEEE 802). Any of the IEEE 802.11 protocol standards may be used for the first Wi-Fi chipset 108 and the second Wi-Fi chipset 110. For example, the 802.11a protocol operates in the 5-6 GHz frequency band and has a data transfer rate of 1.5 megabits per second (Mbps) (1.5 x 10⁶ bits per second) to 54 Mbps (54 x 10⁶ bits per second), the 802.11b protocol operates in the 2.4GHz frequency band and has a maximum data transfer rate of 11 Mbps, the 802.11g protocol operates in the 2.4GHz frequency band and has a maximum data transfer rate of 11 Mbps, the 802.11n protocol operates in the 5GHz frequency band and has a maximum theoretical data transfer rate of 600 Mbps, and the 802.11ac protocol operates in the 5GHz frequency band and has a maximum data transfer rate of 1.3 Gbps. An example of a suitable chipset employing the Wi-Fi protocol 108 is chipset LM TECHNOLOGIES, LM820-0462, WLAN, 802.3/U, 802.11B/G/N, 2.4GHZ, USB.

The gateway device 102 also includes a memory and processor and further comprises the following components: a local database, a communication software module, a parser software module, a maintenance website, a status update and command software module, a redundancy software module, a failover software module, a monitoring and control software module, and a provisioning software module on the single board computer 104.

The local database on the single board computer 104 contains configuration information and current audit/programming data for the cleaning units 114. In an embodiment, the local database allows the system (e.g., the gateway device 102) to recover in case of internet outage because data is stored locally until the connection is restored.

The communication software module is operable to decode and encode communication between the gateway device 102 and the cleaning units 114.

The parser software module is operable to parse binary data from the cleaning units 114 and transform it into human-readable JavaScript Object Notation (JSON) text which can then be used for reporting the status of one or more cleaning units 114 (e.g., to remote user device / administrator device 122, etc.).

The maintenance website is locally stored on the gateway device 102 and is operable to be used for setup, maintenance, and troubleshooting of the gateway device 102 and/or the cleaning units 114.

The status update and command software module is operable to allow real-time status updates and real-time commands from the maintenance website. The status update and command software module connects to a real-time web service which allows all connected devices to stay synchronized. This allows user devices (e.g., local user device 118, remote user device / administrator device 122, etc.) to display updates immediately from the cleaning units 114 as they provide status updates, events, and errors.

The redundancy software module is operable to, in conjunction with a second gateway device 102 (not shown), use a proprietary keep-alive system which is used for active redundancy which will provide continuous operation in the case of device failure of the first gateway device 102.

The failover software module is operable to, in conjunction with the cellular radio chipset 112, automatically failover from a local internet connection (e.g., an Ethernet or Wi-Fi internet connection, etc.) to a cellular internet connection in the case of a local internet outage. This failover functionality provides continuous internet connectivity to the gateway device 102. The gateway device 102 automatically reverts back to the local internet connection (e.g., Ethernet, Wi-Fi, etc.) once internet connectivity has been restored.

The monitoring and control software module is operable to monitor and control all other software modules on the system (e.g., gateway device 102), providing logging, reporting, and recovery as necessary.

The provisioning software module is operable to provision the control unit 116 of each cleaning unit 114 and makes it available for use in the system 100 by: setting the gateway device 102 as an access point in a default network known by the control unit 116 of each cleaning unit 114, transferring credentials to use in a secure connection, and authenticating the control units 116 of the cleaning units 114 to access cloud backend infrastructure (e.g., internet servers and interconnected devices 120, etc.).

The diagram of the gateway device 102 provided in FIG. 3 is of the daughterboard 106 (e.g., the HAT). It contains the cellular radio chipset 112 and the second Wi-Fi chipset 110. The rest of the gateway device 102 illustrated in FIG. 3 is the modified single board computer 104 with the eMMC storage 204. FIG. 2 is a diagram of the single board computer base according to an example aspect of the present invention and shows eMMC storage 204. This diagram displays the baseboard of the gateway device 102. While FIG. 3 is a diagram of the HAT - the daughterboard 106 which has the second Wi-Fi chipset 110 and the cellular radio chipset 112 - FIG. 2 shows the base, which is a modified single board computer 104, implemented with a processor 202 (e.g., a Broadcom BCM2837 processor, etc.). A key feature of this board is that it has been modified to use eMMC storage 204 instead of the standard SD storage.

The gateway device 102 wirelessly and directly connects to the control unit 116 of each cleaning unit 114a, 114b, ..., 114n using the IEEE 802.11 protocol. The gateway device 102 is preferably located within 30 meters of each of the cleaning units 114a, 114b, ..., 114n if the IEEE 802.11 protocol is used. Typically, the gateway device 102 is located nearby the cleaning units 114, or within a distance of 30 meters of the cleaning units 114. The gateway device 102 provides internet-based machine reporting and machine configuration while also enabling users to pay for vended laundry from a mobile device or phone.

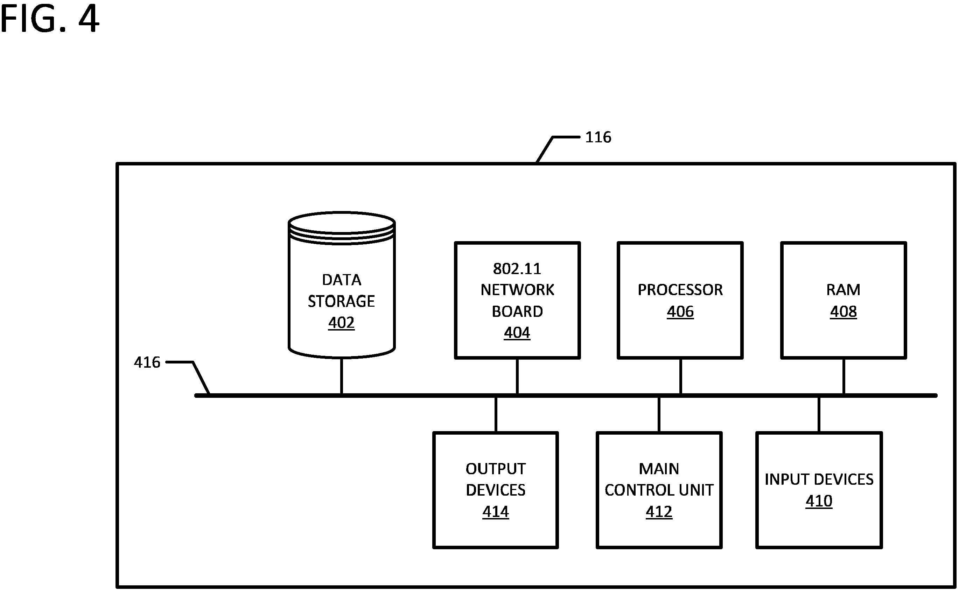

FIG. 4 illustrates the control unit 116 of each cleaning unit 114. The control unit 116 of each cleaning unit 114 comprises data storage or databases 402, a wireless network interface 404, a processor 406, a memory (e.g., RAM) 408, input devices 410, a main control unit 412, and output devices 414, which are electrically and/or communicatively connected by a bus 416. In one embodiment, the control unit 116 includes programmed instructions and algorithms (e.g., software, modules, subroutines, etc.) for carrying out the methods described herein. The bus 416 including, for example, a data bus and a motherboard, can be used to establish and control data communications between the components of the control unit 116. The data storage unit 402 may be a non-volatile memory, such as a hard drive, or other computer readable media known in the art. The control unit 116 includes input devices 410 known in the art, including, e.g., a keypad or keyboard or other peripherals. Example output devices 414 include a display device, an audio device, etc.

The control unit 116 also comprises a main control unit 412 which connects to an 802.11 network daughterboard 404 also located in the control unit 116. The gateway device 102 requests information from the main control unit 412 through the network daughterboard 404. The main control unit 412 contains audit history and programs which are reported to the gateway device 102. The gateway device 102 can request all data or only data changed since the last request. Programs include the types of cycles that the machine (i.e., the cleaning unit 114) can run and the details of those cycles. Audit history includes the information regarding cycles run in the machine's lifetime and error/maintenance history.

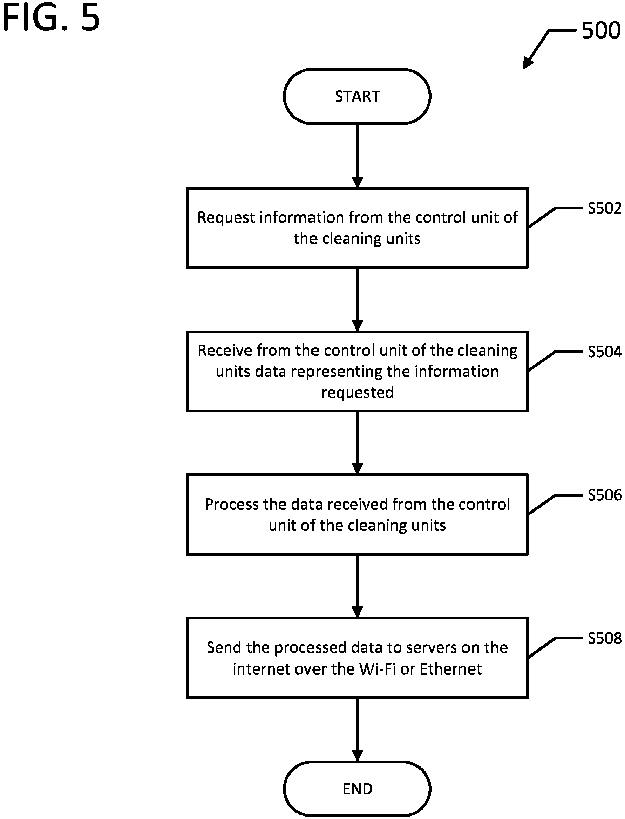

FIG. 5 is a flowchart illustrating a method 500 in accordance with an example aspect of the present invention. The method 500 can be implemented for example in a software program or code embodied in a computer-readable storage medium in the gateway device 102 directed to the processing carried out by the gateway device 102.

In step S502, the gateway device 102 requests information from the control unit 116 of cleaning units 114 connected using the 802.11 protocol, for example in response to a prompt or request by a user or administrator (e.g., via local user device 118, remote user / administrator device 122, etc.). More specifically, as noted above the control unit 116 of each cleaning unit 114 has a main control unit 412 which connects to an 802.11 network daughterboard 404 also located in the control unit 116 as shown in FIG. 4. The gateway device 102 requests information from the main control unit 412 through the network daughterboard 404. The main control unit 412 contains audit history and programs which are reported to the gateway device 102. The gateway device 102 can request all data or only changed data since the last request. Programs include the types of cycles that the machine (e.g., the cleaning unit 114) can run and the details of those cycles. Audit history includes the information regarding cycles run in the machine's lifetime and error/maintenance history.

In step S504 the gateway device 102 receives from the control unit 116 of the cleaning units 114 data representing the information requested.

In step S506 the gateway device 102 processes the data received from the control unit 116 of the cleaning units 114 into digestible form. More specifically, the data is in a byte array which is then decoded into human readable form. This is done using a module that uses byte stream information to determine the type and size of a machine (e.g. cleaning unit 114) and then decodes the rest of the byte array into human readable form.

In step S508 the gateway device 102 sends the processed data or information to servers on the internet 120 over, e.g., Wi-Fi or Ethernet. This information can then be used for reporting.

The gateway device 102 facilitates user machine requests. These requests may take the form of: machine configuration, remote payments, or remote commands. This allows the cleaning units 114 to be controlled from a remote location, thereby enabling users to pay for laundry from an internet-connected device (e.g. local user device 118, remote user device 122, etc.), or location owners/administrators to send configuration or commands to a unit or machine 114 via an internet-connected device (e.g., local user device 118, remote administrator device 122, etc.).

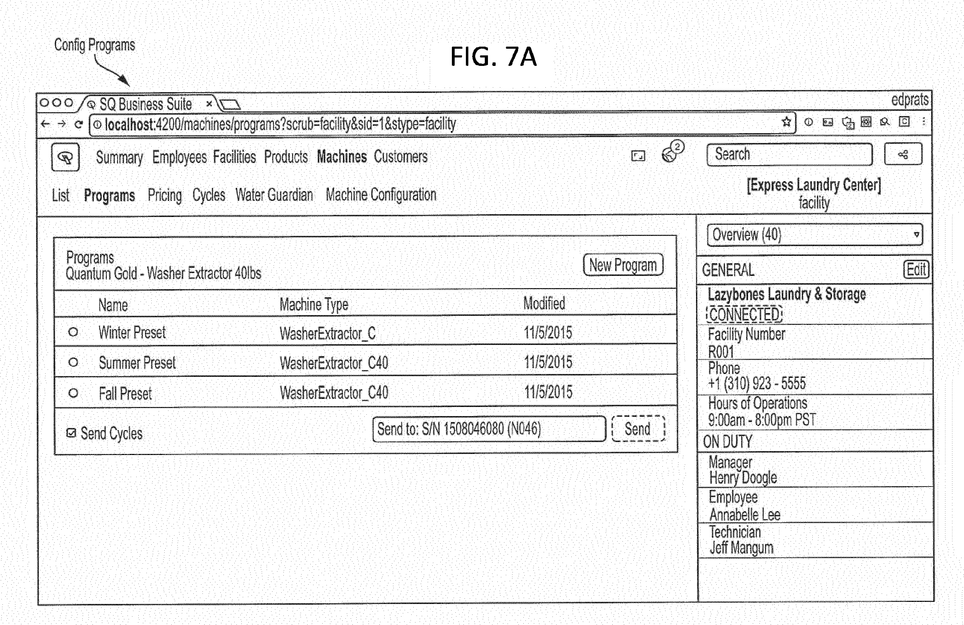

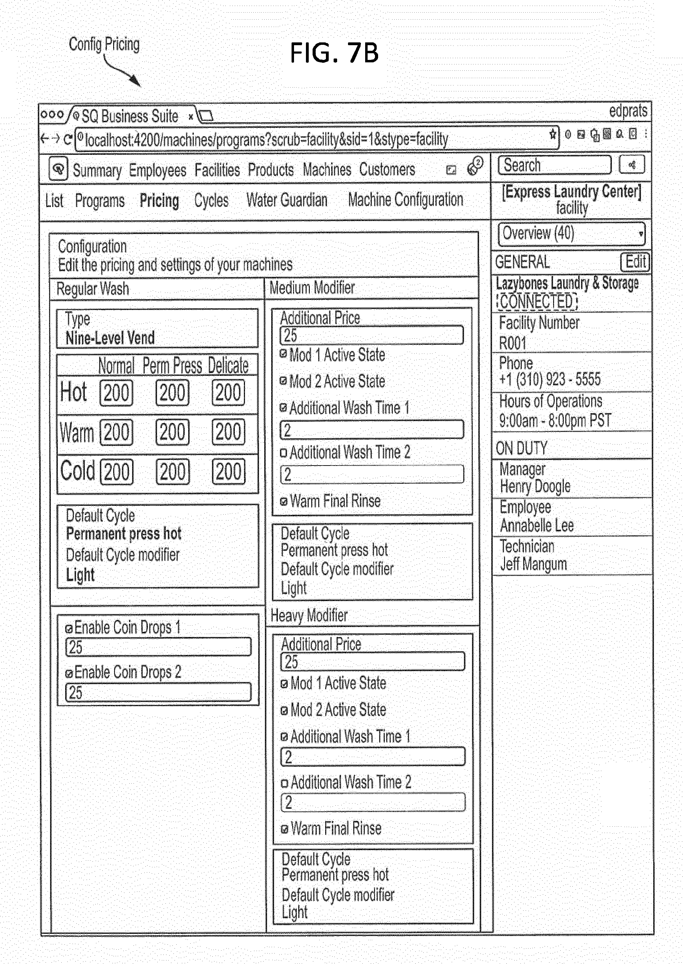

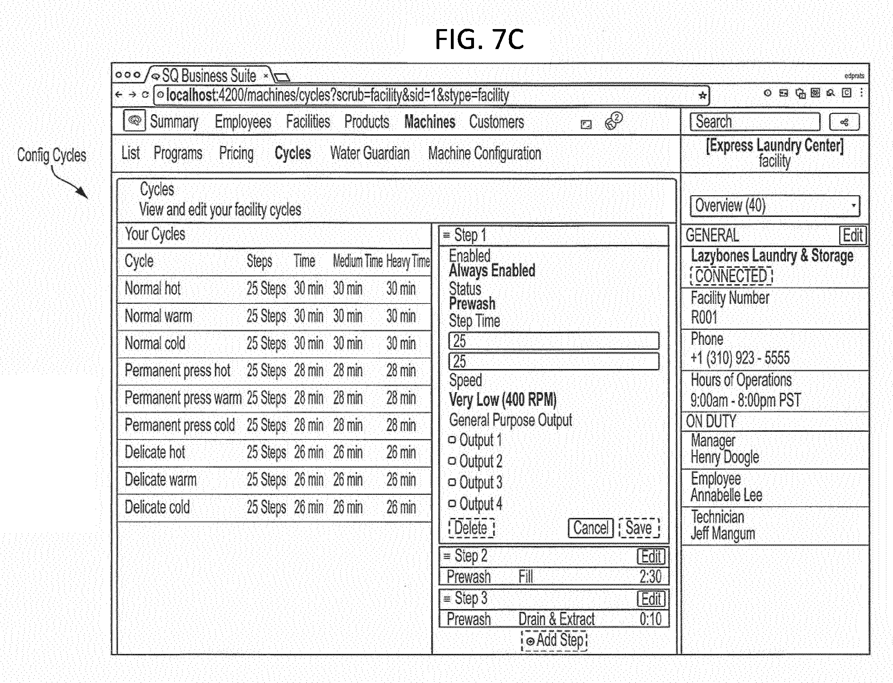

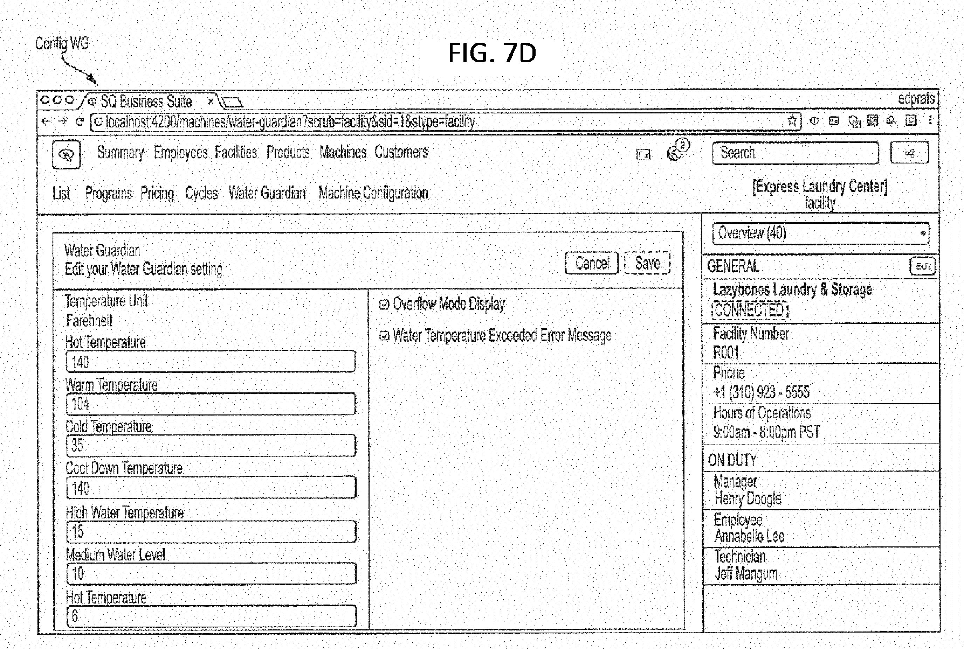

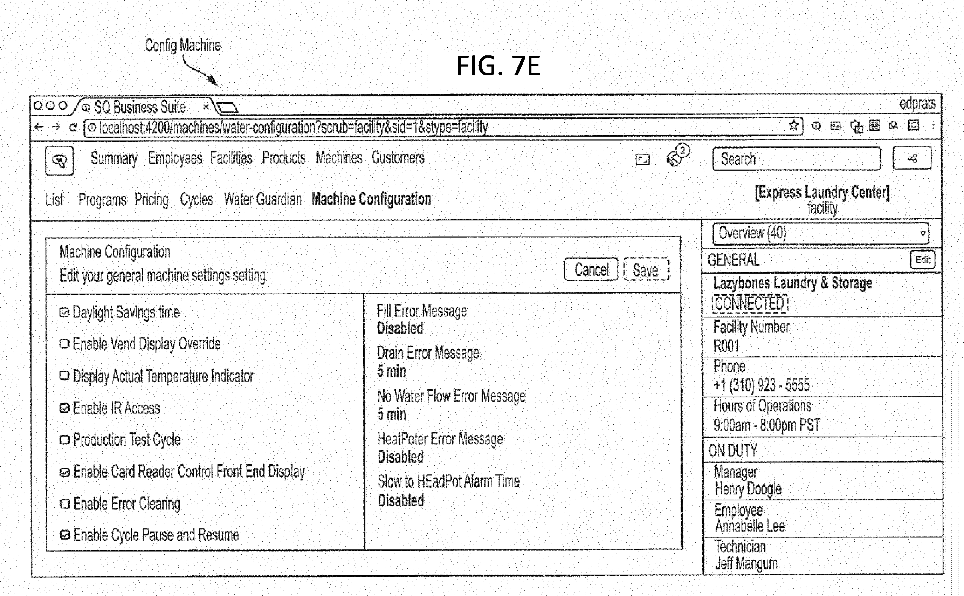

As to location owners/administrators being enabled to send configuration or commands to a unit or machine 114 via an internet-connected device (e.g., local user device 118, remote administrator device 122, etc.), this can be done via the management portal that is reflected in the configuration screens of Figs. 7A-7E. In a preferred embodiment, the device would be a personal computer, laptop or tablet web browser or the like rather than a mobile app, but a device with a mobile app is contemplated also.

Accordingly, as discussed above, the gateway device 102 of the present invention contains a single board computer 104 with added pieces of hardware and software added to achieve its goals. The single board computer 104 has a Wi-Fi chipset (e.g., the first Wi-Fi chipset 108) which allows the gateway device 102 to communicate with the control unit 116 of the cleaning units 114. As also discussed above there is a daughterboard 106 added to the gateway device 102 which contains an 802.11 chipset (e.g., the second Wi-Fi chipset 110) which broadcasts a Wi-Fi network for user setup. In some embodiments, the first Wi-Fi chipset 108 communicates with control units 116 and the second Wi-Fi chipset 110 broadcasts a network for user setup upon coupling (e.g., plugging in, etc.) a default gateway device 102 to internet servers and interconnected devices 120 via a wired connection (e.g., Ethernet, etc.). In other embodiments, the gateway device 102 is coupled to internet servers and interconnected devices 120 via a wireless connection from the second Wi-Fi chipset 110 and the first Wi-Fi chipset 108 communicates with control units 116. In these embodiments, there is no broadcast network and a user must be on the same Wi-Fi network as the second Wi-Fi chipset 110 to access the interface of gateway device 102. There are pieces of software to allow for a user to set up the gateway device 102 and to facilitate the collection, temporary storage, and transmission of data. More specifically, the communication software module, the cloud software module, and the maintenance website described above in connection with an example embodiment describe the functionality that facilitates collection, storage, and transmission. The software that allows for the setup is an embedded web server on the gateway device 102 itself - similar in appearance and functionality to the setup routine used to configure a consumer wireless router in the home. Accordingly, the functions and capabilities available to the user or administrator as described herein can be provided to the user or administrator in the form of a mobile app or "app" available for download to the mobile or PC-based local Wi-Fi device (e.g., via local user device 118, remote user / administrator device 122, etc.).

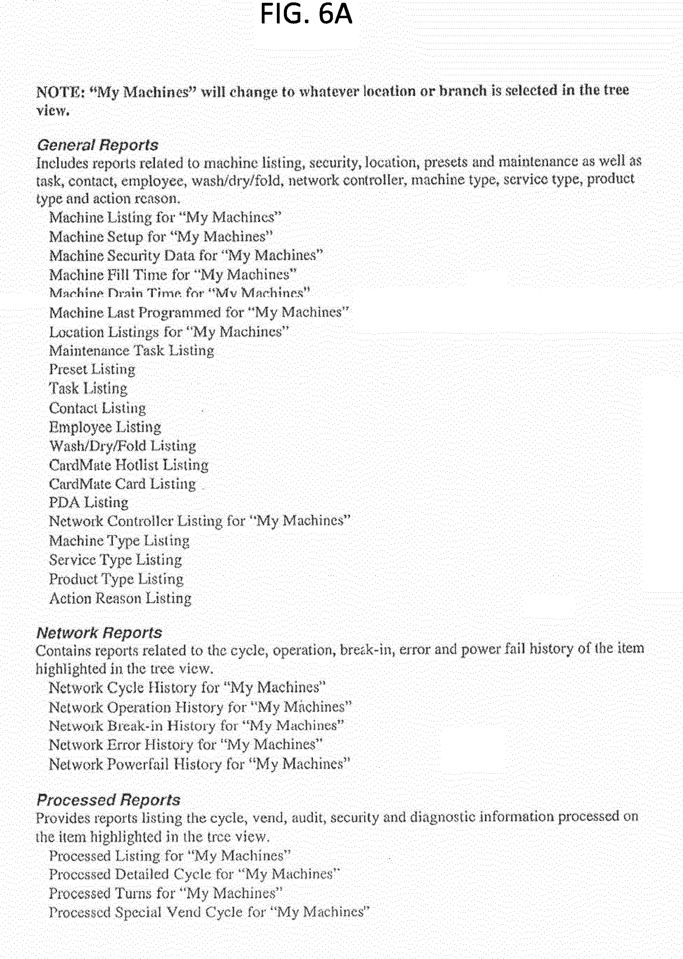

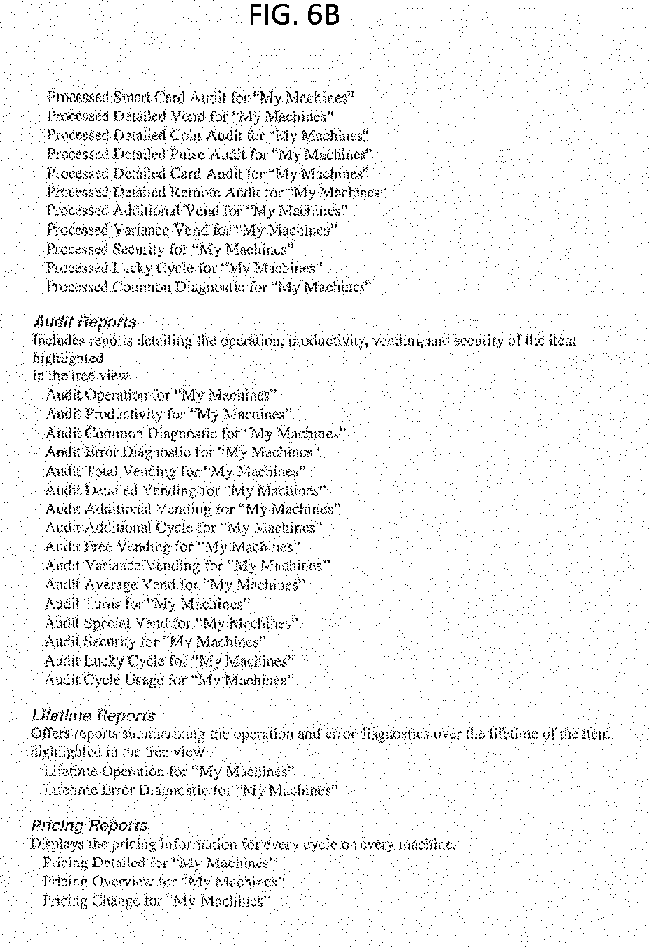

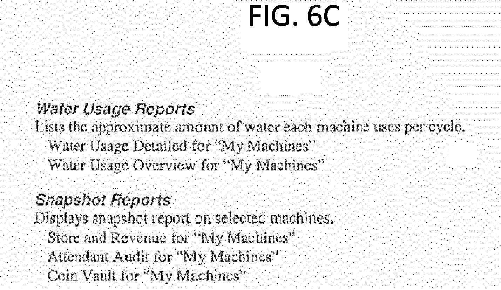

Figs. 6A-6C show examples of reports available through the invention, labeled in the figures as General Reports, Network Reports, Processed Reports, Audit Reports, Lifetime Reports, Pricing Reports, Water Usage Reports, and Snapshot Reports. Real-time alerts include error status, machine availability, time remaining, current cycle info, etc. The list in Figs. 6A-6C is not meant to be limiting or exhaustive of all such examples or features.

In more detail, as shown in Figs. 6A-6C, General Reports include reports related to machine listing, security, location, presets, and maintenance, as well as task, contact, employee, wash/dry/fold, network controller, machine type, service type, product type, and action reason. Network reports contain reports related to the cycle, operation, break-in, error, and power fail history of the item highlighted. Processed Reports include reports listing the cycle, vend, audit, security, and diagnostic information processed on the item highlighted. Audit Reports include reports detailing the operation, productivity, vending, and security of the item highlighted. Lifetime Reports include reports summarizing the operation and error diagnostics over the lifetime of the item highlighted. Pricing Reports include the pricing information for every cycle on every machine. Water Usage Reports include the approximate amount of water each machine uses per cycle. Snapshot Reports include snapshot reports on selected machines such as store and revenue, attendant audit, and coin vault.

"Configuration" includes features such as a user being able to configure or program a wash/dry cycle; a user being enabled to pay for use of a cleaning unit 114; an administrator being able to program a machine; etc. Figs. 7A-7E show example screenshots of various configuration options for a store owner (user type 1) available through a cloud portal that uses the system for communication. A customer in the store (user type 2) would be covered by the Example Implementation set forth below.

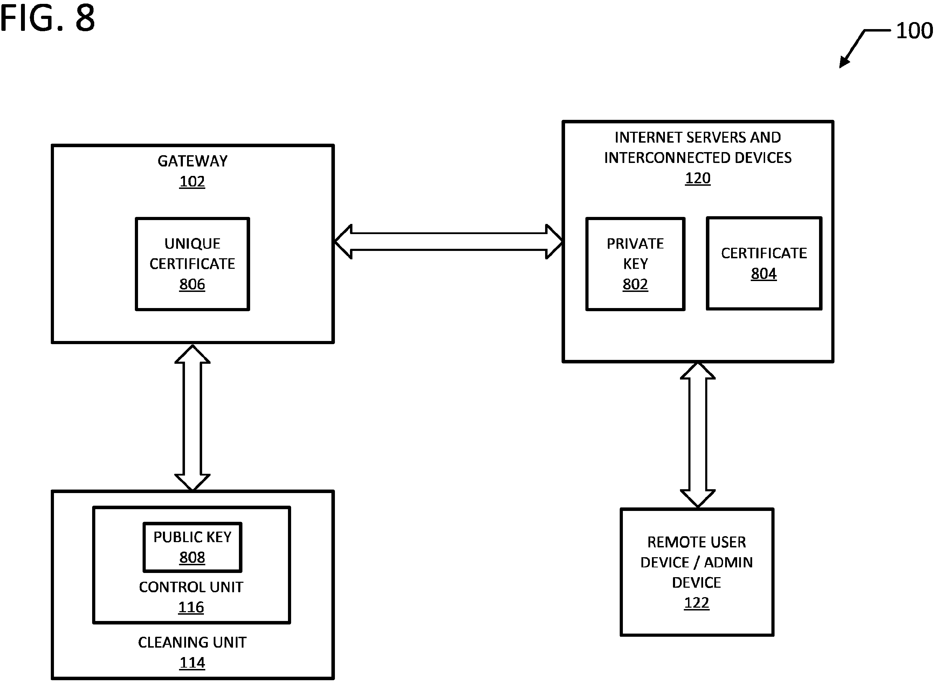

FIG. 8 illustrates an embodiment of the system 100 for provisioning and binding a cleaning unit 114, in accordance with an example aspect of the present invention. In this embodiment, the cloud infrastructure (e.g., internet servers and interconnected devices 120) stores a private key 802 of a certificate 804. As further described herein, the cloud server signs the certificate 804 with the private key 802 to generate a unique certificate 806, which it sends to the gateway device 102 and the gateway device 102 stores. The control unit 116 of each cleaning unit 114 stores a public key 808. For example, the public key 808 can be stored on the control unit 116 during manufacturing of the control unit 116 and/or cleaning unit 114. As further described herein, the system 100 utilizes the private key 802, the certificate 804, the unique certificate 806, and the public key 808 to create a secure connection between the control unit 116 of a cleaning unit 114 and the gateway device 102. The gateway device 102 then utilizes the secure connection to create an elliptic-curve binding between the control unit 116 and the cloud infrastructure (e.g., internet servers and interconnected devices 120).

As illustrated in FIG. 8, the single board computer 104 of the gateway device 102 performs all functions that previously required a PC and proprietary software to complete. The single board computer 104 of the gateway device 102 receives commands from the internet (e.g., internet servers and interconnected devices 120) and translates those commands into language that the control unit 116 of the cleaning unit 114 can act upon. The single board computer 104 also regularly polls the control unit 116 of the cleaning unit 114 for current status and information. The control unit 116 also pushes (e.g., sends, transmits, etc.) events and errors to the gateway device 102 through the 802.11 connection.

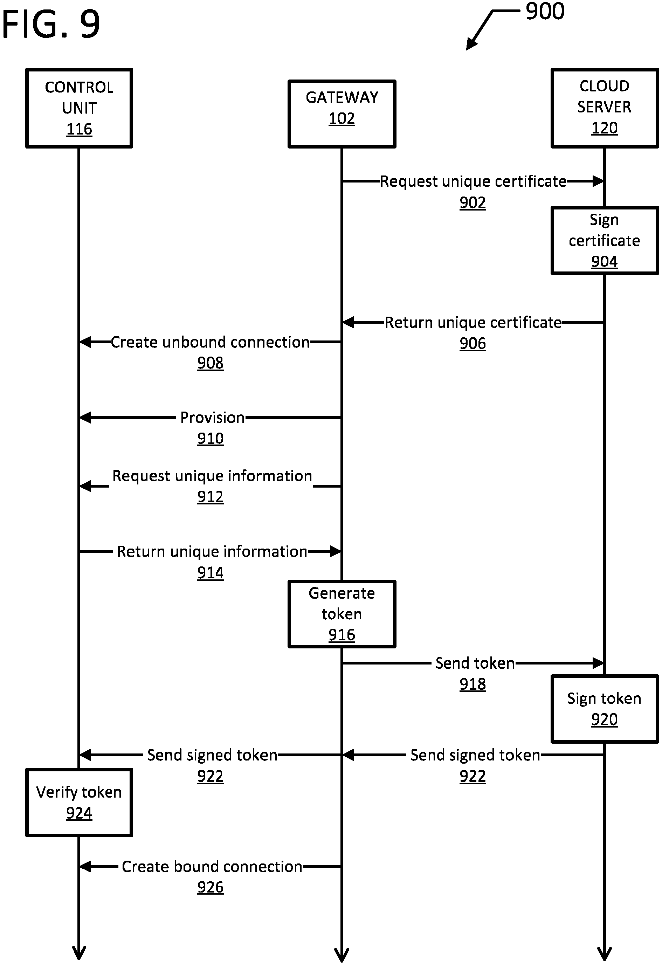

FIG. 9 is a diagram illustrating a provisioning and binding method 900 in accordance with an example aspect of the present invention. In an aspect, the method provides unique, secure provisioning and binding of the control unit 116 of a cleaning unit 114 by way of the Wi-Fi device (e.g., 802.11 network board 404) coupled to the main control unit 412. The gateway device 102 uses a Wi-Fi protocol device (e.g., the first Wi-Fi chipset 108) to broadcast a default service set identifier (SSID) which the Wi-Fi device (e.g., 802.11 network board 404) of the control unit 116 connects to by default. The gateway device 102 passes (e.g., sends, transmits, etc.) a unique/private SSID and password to the Wi-Fi device (e.g., 802.11 network board 404) of the control unit 116 via the default (i.e., unbound) SSID connection. The control unit 116 disconnects from the default SSID connection and connects to the unique/private SSID. After the unique/private SSID connection is completed, the gateway device 102 requests a unique certificate signed by a private certificate of a cloud server. Using the unique certificate, the gateway device 102 and the control unit 116 create a secure connection. The gateway device 102 uses the secure connection to create an elliptic-curve binding between the control unit 116 of the cleaning unit 114 and the cloud infrastructure (e.g., internet servers and interconnected devices 120). In an embodiment, the provisioning and binding method 900 is performed, at least in part, by the provisioning software module on the single board computer 104.

At 902, the gateway device 102 requests a unique certificate from a server device in the cloud (e.g., internet servers and interconnected devices 120). At 904, the cloud server 120 signs the certificate 804 with the private key 802 to generate the unique certificate 806. At 906, the cloud server 120 returns the unique certificate 806 to the gateway device 102.

At 908, the gateway device 102 creates an unbound connection with the control unit 116 of a cleaning unit 114. For example, the gateway device 102 can create the unbound connection by utilizing the first Wi-Fi chipset 108 to broadcast a default SSID that the 802.11 network board 404 of the control unit 116 connects to by default. At 910, the gateway device 102 provisions the control unit 116. In an embodiment, a user utilizes a user device (e.g., local user device 118, etc.) to put the gateway device 102 into a provisioning mode via a web interface of the gateway device 102. At this point, the gateway device 102 broadcasts the default SSID and alerts devices (e.g., control units 116, etc.) that connect to the default SSID of the existence of the unique/private SSID. Those devices then disconnect from the default SSID and move to the unique/private SSID. The gateway device 102 can then be taken out of provisioning mode using the web interface, at which point it returns to broadcasting the unique/private SSID. On the initial unbound connection the control unit 116 verifies that the unique certificate 806 possessed by the gateway device 102 was issued by the cloud server 120. When the control unit 116 determines that the unique certificate 806 possessed by the gateway device 102 was not issued by the cloud server 120, the unbound connection is dropped and the method ends. At 912, the gateway device 102 requests unique information for binding from the control unit 116. Examples of unique information include, but are not limited to, a serial number of the cleaning unit 114 and/or control unit 116, an identification (ID) number of the cleaning unit 114 and/or control unit 116, a current time, and the like. At 914, the control unit 116 returns the unique information for binding to the gateway device 102.

Using the returned unique information, the gateway device 102 generates a binding token at 916. The binding token contains the unique certificate 806 of the gateway device 102. At 918, the gateway device 102 sends the binding token to the cloud server 120. At 920, the cloud server 120 signs the binding token with the private key 802. The cloud server 120 sends the signed binding token to the control unit 116 at 922. For example, the cloud server 120 sends the signed binding token to the gateway device 102, which it turn sends the signed binding token to the control unit 116. At 924, the control unit 116 verifies the binding token. For example, the control unit 116 can be programmed with the public key 808 during manufacturing of the control unit 116 and/or cleaning unit 114, and when the control unit 116 receives the binding token the control unit 116 validates that the binding token originated from the cloud server 120. Furthermore, the control unit 116 validates that an identifier (e.g., a Machine ID, etc.) sent from the cloud server 120 with the binding token is the same identifier of the control unit 116 to confirm the binding token (e.g., the message) is meant for this particular control unit 116. As part of the binding token verification, the control unit 116 also compares a timestamp in the binding token with a current time (e.g., a time the control unit 116 receives the binding token) to ensure the received binding token was generated within a predetermined time period (e.g., within five minutes of the current time, etc.). When the control unit 116 determines that the binding token is invalid, the control unit 116 is unable to bind to the cloud server 120 and the gateway device 102 does not acquire the control unit 116. The control unit 116 will not send any of its information and only certain types of messages (e.g., messages to generate the binding token) are allowed to be transmitted between the control unit 116 and the cloud server 120. When the control unit 116 determines that the binding token is valid, it saves the unique certificate 806 of the gateway device 102 to verify future connections. Furthermore, when the binding token is valid, the gateway device 102 reconnects to the control unit 116 to establish a secure (e.g., "bound") connection at 926. The gateway device 102 decrypts the packet (e.g., the packet that includes the binding token) and validates the time is valid. The gateway device 102 then requests the identifier (e.g., Machine ID) from the control unit 116 and verifies that it is present in a listing of identifiers inside the binding token. When the binding token is valid, the gateway device 102 saves the included "long-lived" certificate and uses it to verify all future connections. When a new connection is made (e.g., a new control unit 116 connects to the gateway device) the gateway device 102 compares the unique information of the new control unit 116 with the saved "long-lived" certificate. When the unique information of the new control unit 116 matches the saved "long-lived" certificate then the gateway device 102 sets the "bound" status to true and the control unit 116 checks this status in a Wi-Fi status packet sent by the gateway device 102 to determine what communications are allowed from the control unit 116. The gateway device 102 uses the secure connection to create an elliptic-curve binding between the control unit 116 and the cloud server 120.

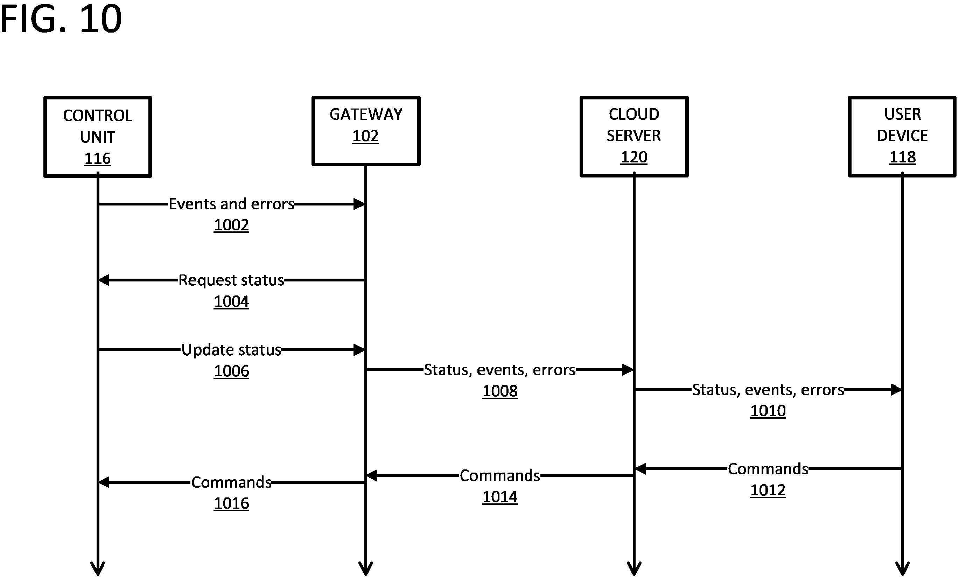

FIG. 10 is a diagram illustrating a real-time update and command method 1000 in accordance with an example aspect of the present invention. In an embodiment, the real-time update and command method 1000 is performed, at least in part, by the status update and command software module on the single board computer 104. At 1002, the control unit 116 of a cleaning unit 114 sends event and error data to the gateway device 102. At 1004, the gateway device 102 requests status data from the control unit 116. At 1006, the control unit 116 sends updated status data to the gateway device 102. At 1008, the gateway device 102 sends the status, event, and error data to a server device in the cloud (e.g., internet servers and interconnected devices 120). At 1010, the cloud server 120 sends the status, event, and error data to a user device (e.g., local user device 118, remote user device / administrator device 122, etc.). The user device can receive commands (e.g., commands for a wash or dry cycle of a cleaning unit 114, etc.) from a user. At 1012, the user device sends the commands to the cloud server 120. At 1014, the cloud server 120 sends the commands to the gateway device 102, which in turn sends the commands to the control unit 116 at 1016.

### Example implementation

The following is a description of an example implementation according to one example aspect of the invention, although it is of course to be understood that this is just an example and the invention is not limited thereto.

According to this example aspect of the invention, a user would use a mobile device such as a smartphone to download an app to use the invention. For example an end user (User Type 2) would download an iOS or Android app.

The user would have two initial configuration tasks: (1) the creation of a user account, and (2) the entering of the location (e.g., laundromat, apartment complex, college dorm, etc.) that the user is in. At that point the app can be used for two purposes:

Pay for usage (e.g., a washing or drying cycle, etc.) of a cleaning unit 114:
- The application uses an online wallet that is funded for example with a saved credit/debit card or a quick response (QR) code served from a value transfer machine (e.g., a machine that takes physical currency and displays a QR code with the value that is then scanned into the app).
- The user selects the desired cleaning unit 114 (e.g., by scanning a QR code or entering in a displayed machine code).
- The user selects options on the cleaning unit 114 and then refreshes the app which shows the current price.
- The user indicates that she wants to pay and the funds are deducted from the online wallet while the start button on the cleaning unit 114 is lit and can then be pressed.
- The gateway device 102 communicates with the control unit 116 of the cleaning unit 114 and the software-as-a-service (SaaS) infrastructure (e.g., internet servers and interconnected devices 120, etc.) of the invention - the mobile app communicates just with the SaaS backend. Thus it looks like the user is "talking" directly with the cleaning unit 114, but the communication is actually asynchronous (e.g., gateway device 102 to cleaning unit 114 and SaaS 120, user device to SaaS 120, etc.).

Look at the availability of cleaning units 114 at the location.
- The gateway device 102 regularly polls the cleaning units 114 in a given location for their status and updates that data on the SaaS backend - the user app reflects that status for each cleaning unit 114 in a location using a color coding system along with details for time remaining (for cleaning units 114 in use).

In the foregoing description, the invention is described with reference to specific example embodiment(s) thereof. The specification and drawings are accordingly to be regarded in an illustrative rather than in a restrictive sense. It will, however, be evident that various modifications and changes may be made thereto, e.g., in a computer program product or software, hardware, or any combination thereof, without departing from the broader spirit and scope of the present invention.

The present invention or any part(s) or function(s) thereof, including, e.g., the gateway device 102, the single board computer 104, the daughterboard 106, the first Wi-Fi chipset 108, the second Wi-Fi chipset 110, the cellular radio chipset 112, or others, the control unit 116 of a cleaning unit 114 may be implemented using hardware, software, or a combination thereof, and may be implemented in one or more computer systems or other processing systems. A computer system for performing the operations of the present invention and capable of carrying out the functionality described herein can include one or more processors connected to a communications infrastructure (e.g., a communications bus, a cross-over bar, or a network). Various software embodiments are described in terms of such an exemplary computer system. After reading this description, it will become apparent to a person skilled in the relevant art(s) how to implement the invention using other computer systems and/or architectures.

The computer system can include a display interface that forwards graphics, text, and other data from the communication infrastructure (or from a frame buffer) for display on a display unit. The display interface can communicate with a browser. The computer system also includes a main memory, preferably a random access memory, and may also include a secondary memory and a database. The secondary memory may include, for example, a hard disk drive and/or a removable storage drive, representing a floppy disk drive, a magnetic tape drive, an optical disk drive, etc. The removable storage drive reads from and/or writes to a removable storage unit in a well-known manner. The removable storage unit can represent a floppy disk, magnetic tape, optical disk, etc. which is read by and written to by the removable storage drive. As will be appreciated, the removable storage unit can include a computer usable storage medium having stored therein computer software and/or data.

The computer system may also include a communications interface which allows software and data to be transferred between the computer system and external devices. The terms "computer program medium" and "computer usable medium" are used to refer generally to media such as the removable storage drive, a hard disk installed in the hard disk drive, and signals. These computer program products provide software to the computer system.

Computer programs or control logic are stored in the main memory and/or the secondary memory. Computer programs may also be received via the communications interface. Such computer programs or control logic (software), when executed, cause the computer system or its processor to perform the features and functions of the present invention, as discussed herein. It is common in the art to speak of software, in one form or another (e.g., program, procedure, process, application, module, unit, logic, and so on) as taking an action or causing a result. Such expressions are merely a shorthand way of stating that the execution of the software by a processing system causes the processor to perform an action to produce a result.

In addition, it should be understood that the figures illustrated in the attachments, which highlight the functionality and advantages of the present invention, are presented for example purposes only. The architecture of the present invention is sufficiently flexible and configurable, such that it may be utilized (and navigated) in ways other than that shown in the accompanying figures.

## Claims

1. A system for remotely communicating with one or more cleaning units, the system comprising:
one or more cleaning units, each cleaning unit comprising:
a control unit coupled to the cleaning unit for operating the cleaning unit; and
a control unit communication device coupled to the control unit, wherein the control unit communication device is operable to communicate via a Wi-Fi protocol;
a gateway device comprising:
a first Wi-Fi protocol device; and
a second Wi-Fi protocol device, wherein the second Wi-Fi protocol device is operable to wirelessly couple to the control unit communication device of the cleaning units via the Wi-Fi protocol;
wherein the gateway device is nearby each of the cleaning units; and
an internet connected device wirelessly coupled to the first Wi-Fi protocol device; and
wherein the gateway device enables the internet connected device to communicate wirelessly with each of the cleaning units thereby enabling the internet connected device to wirelessly configure or control each of the cleaning units.

2. The system of claim 1:
wherein the first Wi-Fi protocol device and the second Wi-Fi protocol device each comprise an IEEE 802.11 protocol device, and
wherein the gateway device further includes a cellular chipset.

3. The system of claim 1 or claim 2, wherein the one or more cleaning units are a laundry washer or a laundry dryer;
wherein a distance between the gateway device and each of the cleaning units is less than or equal to 30 meters;
wherein the control unit communication device, the first Wi-Fi protocol device, and the second Wi-Fi protocol device each have a data transfer rate of greater than or equal to 1.5 megabits per second, Mbps; or
wherein the internet connected device comprises a personal computer, a laptop, a notebook, a tablet, or a mobile phone.

4. The system of any one of the preceding claims, wherein the gateway device further comprises:
a single board computer comprising:
an embedded Multi-Media Controller, eMMC, storage;
a central processing unit, CPU, coupled to the eMMC; and
a memory coupled to the CPU.

5. The system of any one of the preceding claims, wherein the control unit comprises:
a processor;
a memory coupled to the processor; and
a non-volatile data storage unit coupled to the memory.

6. The system of any one of the preceding claims, wherein configuring a cleaning unit of the one or more cleaning units comprises programming a wash cycle or a dry cycle.

7. The system of any one of the preceding claims, wherein controlling a cleaning unit comprises submitting a payment for a respective cleaning unit for a cleaning cycle or wirelessly receiving a report from each cleaning unit.

8. The system of any one of the preceding claims, further comprising a cloud server storing a private key and a certificate,
wherein the control unit of at least one cleaning unit of the one or more cleaning units stores a public key,
wherein the gateway device is operable to request a unique certificate from the cloud server,
wherein the cloud server is operable to generate the unique certificate from the private key and the certificate stored thereon and return the unique certificate to the gateway device,
wherein the gateway device is operable to create an unbound wireless connection with the control unit communication device of the at least one cleaning unit,
wherein the gateway device is operable to provision the control unit of the at least one cleaning unit,
wherein the gateway device is operable to request unique information from the control unit of the at least one cleaning unit,
wherein the control unit of the at least one cleaning unit is operable to return the requested unique information,
wherein the gateway device is operable to generate a binding token from the unique information and the unique certificate and send the binding token to the cloud server,
wherein the cloud server is operable to sign the binding token with the private key and return the signed binding token to the gateway device,
wherein the gateway device is operable to send the signed binding token to the control unit,
wherein the control unit is operable to verify the signed binding token, and
wherein the gateway device is operable to create a bound wireless connection with the control unit.

9. A method for remotely communicating with one or more cleaning units, the method comprising:
providing one or more cleaning units, each cleaning unit comprising:
a control unit coupled to the cleaning unit for operating the cleaning unit; and
a control unit communication device coupled to the control unit, wherein the control unit communication device is operable to communicate via a Wi-Fi protocol;
providing a gateway device comprising:
a first Wi-Fi protocol device,
a second Wi-Fi protocol device, and
a cellular radio chipset,
wherein the gateway device is nearby each of the cleaning units;
wirelessly coupling the second Wi-Fi protocol device to the control unit communication device of the cleaning units via the Wi-Fi protocol; and
wirelessly coupling an internet connected device to the first Wi-Fi protocol device thereby enabling the internet connected device to wirelessly configure or control at least one of the cleaning units.

10. The method of claim 9, wherein the control unit communication device, the first Wi-Fi protocol device, and the second Wi-Fi protocol device each comprise an IEEE 802.11 protocol device;
wherein the one or more cleaning units are a laundry washer or a laundry dryer;
wherein a distance between the gateway device and each of the cleaning units is less than or equal to 30 meters;
wherein the control unit communication device, the first Wi-Fi protocol device, and the second Wi-Fi protocol device each have a data transfer rate of greater than or equal to 1.5 megabits per second, Mbps; or
wherein the internet connected device comprises a personal computer, a laptop, a notebook, a tablet, or a mobile phone.

11. The method of claim 9 or claim 10, wherein the gateway device further comprises:
a single board computer comprising:
an embedded Multi-Media Controller, eMMC, storage;
a central processing unit, CPU, coupled to the eMMC; and
a memory coupled to the CPU.

12. The method of any one of claims 9 to 11, wherein the control unit comprises:
a processor;
a memory coupled to the processor; and
a non-volatile data storage unit coupled to the memory.

13. The method of any one of claims 9 to 12, wherein configuring the at least one cleaning unit comprises programming a wash cycle or a dry cycle.

14. The method of any one of claims 9 to 13, wherein controlling the at least one cleaning unit comprises submitting a payment for a cleaning cycle or wirelessly receiving a report from the at least one cleaning unit.

15. The method of any one of claims 9 to 14, further comprising:
storing, by a cloud server, a private key and a certificate;
storing, by the control unit of the at least one cleaning unit, a public key;
requesting, by the gateway device, a unique certificate from the cloud server;
generating, by the cloud server, the unique certificate from the private key and the certificate stored thereon;
returning, by the cloud server, the unique certificate to the gateway device;
creating, by the gateway device, an unbound wireless connection with the control unit communication device of the at least one cleaning unit;
provisioning, by the gateway device, the control unit of the at least one cleaning unit;
requesting, by the gateway device, unique information from the control unit of the at least one cleaning unit;
returning, by the control unit, the requested unique information to the gateway device;
generating, by the gateway device, a binding token from the unique information and the unique certificate;
sending, by the gateway device, the binding token to the cloud server;
signing, by the cloud server, the binding token with the private key;
returning, by the cloud server, the signed binding token to the gateway device;
sending, by the gateway device, the signed binding token to the control unit;
verifying, by the control unit, the signed binding token; and
creating, by the gateway device, a bound wireless connection with the control unit.
